# EUROPEAN PATENT APPLICATION

(11) **EP 4 818 906 A1**
(43) Date of publication of application: **07.10.2026**
(21) Application number: 24909931.8
(22) Date of filing: 30.08.2024
(51) Int. Cl.: G06F 11/22

(54) **FAULT PREDICTION METHOD AND APPARATUS, AND RELATED DEVICE**

(30) Priority: 29.12.2023 CN 202311871806
(71) Applicant: Huawei Technologies Co., Ltd., Shenzhen, Guangdong 518129 (CN)
(72) Inventor: WAN, Jun, Shenzhen, Guangdong 518129 (CN); TIAN, Kun, Shenzhen, Guangdong 518129 (CN); DONG, Weiwei, Shenzhen, Guangdong 518129 (CN)
(74) Representative: Thun, Clemens
(86) International application number: PCT/CN2024/115829
(87) International publication number: WO 2025/138982

(57) **Abstract**

A fault prediction method and apparatus, and a related device are provided, relating to the field of computer technologies. Multiple pieces of error data are obtained, where each piece of error data indicates that a CE occurs in a storage medium. The multiple pieces of error data are classified. Fault prediction is performed, by using a first machine learning model, on first-type error data obtained through classification, and fault prediction is performed, by using a second machine learning model, on second-type error data obtained through classification, to obtain corresponding prediction results indicating whether a UCE occurs in the storage medium. A precision of the first machine learning model in predicting a UCE is greater than a first threshold, and a recall of predicting of the second machine learning model in predicting a UCE is greater than a second threshold. In this way, fault prediction is performed on different types of error data by using the machine learning model with a high prediction precision and the machine learning model with a high recall, so that both a precision and a recall of fault prediction can be considered, thereby effectively improving an overall prediction effect for the multiple pieces of error data.

## Description

This application claims priority to Chinese Patent Application No. 202311871806.3, filed with the China National Intellectual Property Administration on December 29, 2023 and entitled "FAULT PREDICTION METHOD AND APPARATUS, AND RELATED DEVICE", which is incorporated herein by reference in its entirety.

### TECHNICAL FIELD

This application relates to the field of computer technologies, and in particular, to a fault prediction method and apparatus, and a related device.

### BACKGROUND

With the development of storage technologies, fabrication processes for storage media like memories are continuously scaled down, and read/write rate metrics of the storage media have also continuously improved. At the same time, however, the probability of failures in the storage media has gradually increased. For example, the impact of contamination residues in the storage media becomes more significant, such that the contamination residues are more likely to cause failures in the storage media.

Generally, a device may use a built-in error correction code (ECC) mechanism to ensure reliability of data stored in the storage media. However, when an error occurring in the storage medium exceeds the error correction capability of the ECC mechanism, the error may result in an uncorrectable error (UCE), which may in turn cause the device experience process hangs, device restarts, crashes, or the like, thereby affecting service operation on the device.

Currently, for errors reported by the storage media, error data is typically input into a machine learning model, and the machine learning model predicts, based on the input error data, whether a UCE will occur in the storage media, so that corresponding fault isolation is performed on the storage media after occurrence of the UCE is determined. However, in actual practice scenarios, it is difficult for the machine learning model to achieve both a high precision and a high recall for fault prediction on the storage media. For example, when the precision of fault prediction performed by using the machine learning model reaches 70%, the recall of fault prediction performed by using the machine learning model may reach only 20%. That is, when multiple UCEs actually occur, the machine learning model can predict only a relatively small proportion of UCEs. Therefore, the effect of fault prediction performed by using the machine learning model is unsatisfactory. As a result, in actual practice scenarios, failures of the storage media frequently cannot be predicted, and UCEs caused by the failures of the storage media are therefore likely to have a relatively large impact on service operation on the device.

### SUMMARY

This application provides a fault prediction method, to improve an overall prediction effect for Multiple pieces of error data. In addition, this application further provides a fault prediction apparatus, a BMC, a compute device, a computer-readable storage medium, and a computer program product.

According to a first aspect, this application provides a fault prediction method. The method may be performed by a corresponding fault prediction apparatus. Specifically, the fault prediction apparatus obtains Multiple pieces of error data, such as CE data, and each of the multiple pieces of error data indicates that a CE (correctable error) occurs in a storage medium. The storage medium may be, for example, a memory or another type of storage medium. Then, the fault prediction apparatus classifies the multiple pieces of error data, to obtain first-type error data and second-type error data. For example, the multiple pieces of error data may be classified according to a preset classification rule. Finally, the fault prediction apparatus performs fault prediction on the first-type error data by using a first machine learning model, to obtain a first prediction result, where the first prediction result indicates whether a UCE (uncorrectable error) occurs in the storage medium, and a precision of the first machine learning model in predicting a UCE is higher than a first threshold, that is, performs fault prediction on the first-type error data by using the machine learning model with a high precision. In addition, the fault prediction apparatus further performs fault prediction on the second-type error data by using a second machine learning model, to obtain a second prediction result, where the second prediction result indicates whether a UCE occurs in the storage medium, and a recall of predicting of the second machine learning model in predicting a UCE is higher than a second threshold, that is, performs fault prediction on the second-type error data by using the machine learning model with a high recall.

In this way, the fault prediction apparatus classifies the multiple pieces of error data corresponding to the storage medium, performs fault prediction on the first-type error data by using the machine learning model with the high prediction precision, and performs fault prediction on the second-type error data by using the machine learning model with the high recall, so that an overall fault prediction result of the multiple pieces of error data can reach a high precision, and also reach a high recall. In other words, both a precision and a recall of fault prediction are considered, thereby effectively improving an overall prediction effect for the multiple pieces of error data. This helps reduce impact of the UCE that occurs in the storage medium on service operation on a device in which the storage device is located.

In a possible implementation, after the fault prediction apparatus classifies the multiple pieces of error data, a positive-and-negative sample ratio corresponding to the obtained first-type error data is less than a positive-and-negative sample ratio corresponding to the second-type error data, the positive-and-negative sample ratio is a ratio between a quantity of positive samples and a quantity of negative samples, the positive samples are error data generated when a UCE occurs in the storage medium, and the negative samples are error data generated when a CE occurs in the storage medium. In this way, whether the UCE occurs in the storage medium is predicted, by using the machine learning model with the high precision, from the first-type error data in which positive samples account for a relatively large proportion, so that the positive samples in the first-type error data can be predicted as much as possible, that is, actual UCEs can be predicted as much as possible. Whether the UCE occurs in the storage medium is predicted, by using the machine learning model with the high recall, from the second-type error data in which positive sample account for a relatively small proportion, so that positive samples in the second-type error data can be predicted in a wide range as possible. That is, a result predicted as the UCE covers all actual UCEs as much as possible. In this way, in fault prediction for the multiple pieces of error data, both a precision and a recall of fault prediction are considered.

In a possible implementation, the first machine learning model and the second machine learning model have different model structures or different hyperparameters.

In a possible implementation, the fault prediction apparatus may further obtain a ground-truth result corresponding to the first-type error data, where the ground-truth result indicates that a UCE or a CE occurs in the storage medium, so that the fault prediction apparatus may update the first machine learning model based on the first prediction result and the ground-truth result corresponding to the first-type error data. Alternatively, the fault prediction apparatus may obtain a ground-truth result corresponding to the second-type error data, where the ground-truth result indicates that a UCE or a CE occurs in the storage medium, so that the fault prediction apparatus may update the second machine learning model based on the second prediction result and the ground-truth result corresponding to the second-type error data. In this way, the fault prediction apparatus dynamically updates the machine learning model based on the prediction result and the ground-truth result, so that accuracy of subsequent prediction of the machine learning model can be further improved, and a precision and a recall of fault prediction performed for the multiple pieces of error data can be further improved.

In a possible implementation, the multiple pieces of error data are classified by using a classifier. In this case, the fault prediction apparatus may further obtain the ground-truth result corresponding to the first-type error data and the ground-truth result corresponding to the second-type error data, where the ground-truth result indicates that a UCE or a CE occurs in the storage medium. Therefore, the fault prediction apparatus may update the classifier based on the ground-truth result corresponding to the first-type error data, the ground-truth result corresponding to the second-type error data, the first prediction result, and the second prediction result. In this way, the fault prediction apparatus dynamically updates the classifier, so that a subsequent classification result of the classifier for new error data is more precise, thereby helping further improve a precision and a recall of fault prediction performed for the multiple pieces of error data.

In a possible implementation, the multiple pieces of error data are classified by using the classifier, and the classifier includes a first classification rule. In this case, when classifying the multiple pieces of error data, the fault prediction apparatus may specifically classify the multiple pieces of error data according to the first classification rule in the classifier.

In a possible implementation, the multiple pieces of error data are classified by using the classifier, and the classifier includes a first classification rule and a second classification rule. In this case, when classifying the multiple pieces of error data, the fault prediction apparatus may specifically classify the multiple pieces of error data according to the first classification rule in the classifier, to obtain the first-type error data, the second-type error data, third-type error data, and fourth-type error data. Correspondingly, the fault prediction apparatus may further perform fault prediction on the third-type error data by using a third machine learning model, to obtain a third prediction result, where the third prediction result indicates whether an uncorrectable error UCE occurs in the storage medium; and perform fault prediction on the fourth-type error data by using a fourth machine learning model, to obtain a fourth prediction result, where the fourth prediction result indicates whether a UCE occurs in the storage medium. In this way, the fault prediction apparatus may perform, for multiple different types by using different machine learning models, fault prediction on a corresponding type of error data, to help improve an overall prediction effect for the multiple pieces of error data.

In a possible implementation, the fault prediction apparatus may further output multiple candidate classification rules, and determine, in response to a selection operation of a user for the multiple candidate classification rules, the first classification rule used by the classifier to classify the multiple pieces of error data. In this way, the fault prediction apparatus may support the user in selecting a classification rule used for classifying error data, to facilitate user intervention and improve user experience.

According to a second aspect, this application provides a fault prediction apparatus. The fault prediction apparatus includes modules configured to perform the fault prediction method in any one of the first aspect or the possible implementations of the first aspect.

According to a third aspect, this application provides a BMC. The BMC includes a power supply circuit and a processing circuit. The power supply circuit is configured to supply power to the processing circuit, and the processing circuit is configured to perform the fault prediction method according to any one of the first aspect or the implementations of the first aspect.

According to a fourth aspect, this application provides a compute device. The compute device includes a processor and a memory. The processor and the memory communicate with each other. The processor is configured to execute instructions stored in the storage, to cause the compute device to perform the fault prediction method according to any one of the first aspect or the implementations of the first aspect. It should be noted that the storage may be integrated into the processor, or may be independent of the processor. The compute device may further include a bus. The processor is connected to the storage through the bus. The storage may include a readable storage and a random access memory.

According to a fifth aspect, this application provides a computer-readable storage medium. The computer-readable storage medium stores instructions. When the instructions are executed by a compute device, the compute device is caused to perform operation steps of the fault prediction method according to any one of the first aspect or the implementations of the first aspect.

According to a sixth aspect, this application provides a computer program product including instructions. When the computer program product runs on a compute device, the compute device is caused to perform operation steps of the fault prediction method according to any one of the first aspect or the implementations of the first aspect.

Based on the implementations provided in the foregoing aspects, this application may further provide more implementations through further combination.

### BRIEF DESCRIPTION OF DRAWINGS

FIG. 1 is a diagram of a structure of an example data processing system according to this application;
FIG. 2 is a diagram of a structure of another example data processing system according to this application;
FIG. 3 is a schematic flowchart of a fault prediction method according to this application;
FIG. 4 is a diagram of performing prediction on different types of data by using machine learning models corresponding to different channels;
FIG. 5 is a diagram of a structure of a fault prediction apparatus according to this application; and
FIG. 6 is a diagram of a hardware structure of a compute device according to this application.

### DESCRIPTION OF EMBODIMENTS

To improve a fault prediction effect and reduce impact of a UCE on service operation on a device, this application provides a fault prediction method. Multiple pieces of error data corresponding to a storage medium are classified, and a machine learning model (with a high prediction precision or a high prediction recall) that matches each type of error data is used to predict whether the UCE occurs in the storage medium. In this way, both a precision and a recall of fault prediction can be considered, thereby effectively improving an overall effect of fault prediction for the multiple pieces of error data. This helps reduce the impact of the UCE in the storage medium on service operation on the device.

The following describes technical solutions of this application with reference to accompanying drawings of this application.

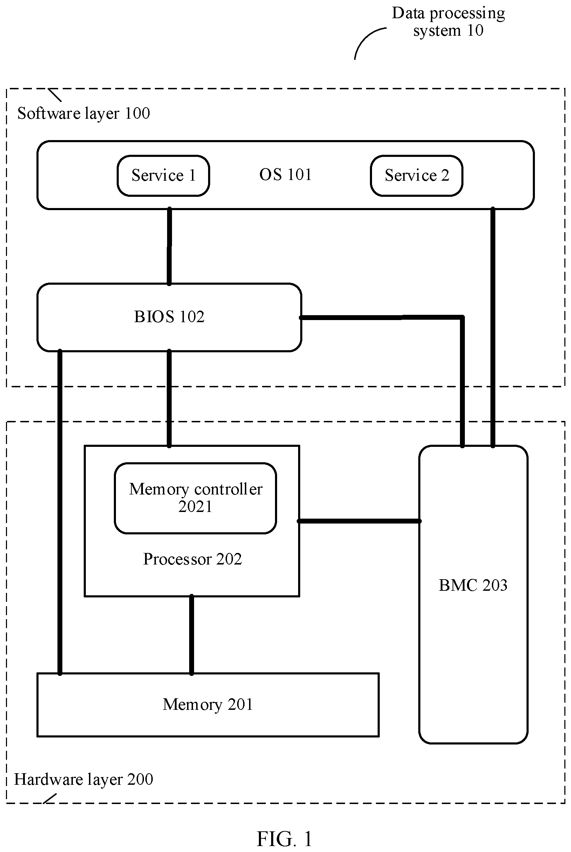

FIG. 1 is a diagram of a structure of a data processing system. As shown in FIG. 1, the data processing system 10 includes a software layer 100 and a hardware layer 200. The software layer 100 may include an operating system (operating system, OS) 101 and a basic input/output system (basic input/output system, BIOS) 102. The hardware layer 200 may include a memory 201, a processor 202, and a baseboard management controller (baseboard management controller, BMC) 203. In addition, the memory 201, the processor 202, and the BMC 203 may be connected through a bus, for example, through a peripheral component interconnect express (peripheral component interconnect express, PCIe) bus or another type of bus. In addition, the OS 101 and the BIOS 102 in the software layer 100 may run on the processor 201.

The OS 101 is configured to control and manage resources at the software layer 100 and the hardware layer 200, for example, indicate a memory controller 2021 in the hardware layer 200 to start a process of isolating an area in which a fault occurs in the memory 201. In addition, one or more services may run in the OS 101. In FIG. 1, an example in which a service 1 and a service 2 are run is used for description.

The BIOS 102 is configured to provide underlying hardware configuration and control, for example, may detect and report whether the area in which the fault occurs exists in the memory 201, and indicate, under triggering of the BMC 203, the processor 202 to perform a fault isolation operation for the memory 201.

The memory 201 is configured to store operation data of the processor 202, including data that needs to be read when the processor 202 performs calculation, result data generated after the processor 202 performs calculation, and the like. For example, the memory 201 may include one or more dual inline memory modules (dual inline memory modules, DIMMs). One DIMM may be used as a memory module entity, and each memory module may have two surfaces, and a memory chip is deployed on each surface. Alternatively, the memory 201 may be a double data rate synchronous dynamic random-access memory (double data rate synchronous dynamic random-access memory, DDR), a low power DDR (low power double data rate SDRAM, LPDDR), a phase change memory (phase change memory, PCM), a resistive random access memory (resistive random access memory, RRAM), a magneto resistive random access memory (magneto resistive random access memory, MRAM), a ferroelectric random access memory (Ferroelectric random access memory, FeRAM), a nano random access memory (NRAM), a static random access memory (static random access memory, SRAM), a high bandwidth memory (high bandwidth memory, HBM), or the like. This is not limited herein. Optionally, the memory 201 may alternatively be a heterogeneous memory. In other words, two or more different types of storage media are used as the memory.

The processor 202 is configured to perform a corresponding processing operation, for example, perform an operation that needs to be performed when a service in the OS 101 is run. For example, the processor 202 may be a central processing unit (central processing unit, CPU), or may be another type of processor, for example, an application-specific integrated circuit (application-specific integrated circuit, ASIC). In addition, the memory controller 2021 may be configured in the processor 202, and is configured to perform a corresponding data read/write operation on the memory 201. In a process of reading and writing data, the memory controller 2021 can detect whether a fault exists in a corresponding storage area in the memory 201, and can provide, for the BIOS 102, related information of a detected area in which a fault occurs.

The BMC 203 is configured to perform fault diagnosis on the memory 201 based on error data reported by the BIOS 102, to determine whether a UCE occurs in the memory 201.

Specifically, when an error occurs in a part of a storage area in the memory 201, the memory controller 2021 provides the BIOS 102 with error data corresponding to the storage area, and the BIOS 102 reports the error data to the BMC 203. The error data may indicate that a CE occurs in the memory 201. The error data may include, for example, information such as a storage area for which the error is reported and that is in the memory 201, a data input/output channel (DQ), and a burst (burst). In this way, the BMC 203 may obtain, in a period of time, Multiple pieces of error data reported by the BIOS 102, and classify the multiple pieces of error data, to obtain type-1 error data and type-2 error data. Generally, each type of error data includes error data generated due to a UCE and error data generated due to a CE. In the type-1 error data, a ratio between error data caused by a UCE and error data caused by a CE may be relatively small. In the type-2 error data, a ratio between error data caused by a UCE and error data caused by a CE may be relatively large. In this way, the BMC 203 may perform fault prediction on the type-1 error data by using a machine learning model 1 with a high precision (precision) rate of predicting a UCE, and obtain a corresponding prediction result 1. The prediction result 1 indicates whether a UCE occurs in the memory 201. In addition, the BMC 203 further performs fault prediction on the type-2 error data by using a machine learning model 2 with a high coverage (recall) rate of predicting a UCE, and obtains a corresponding prediction result 2. The prediction result 2 indicates whether a UCE occurs in the memory 201.

In this way, the BMC 203 classifies the multiple pieces of error data corresponding to the memory 201, performs fault prediction on the type-1 error data by using the machine learning model 1 with the high prediction precision, and performs fault prediction on the type-2 error data by using the machine learning model 2 with the high recall, so that an overall fault prediction result of the multiple pieces of error data can reach a high precision, and also reach a high recall. In other words, both a precision and a recall of fault prediction are considered, thereby effectively improving an overall prediction effect for the multiple pieces of error data. This helps reduce impact of the UCE that occurs in the memory 201 on running of the service 1 and the service 2 in the OS 101.

It should be noted that the data processing system 10 shown in FIG. 1 is merely used as an example for description, and is not intended for limitation.

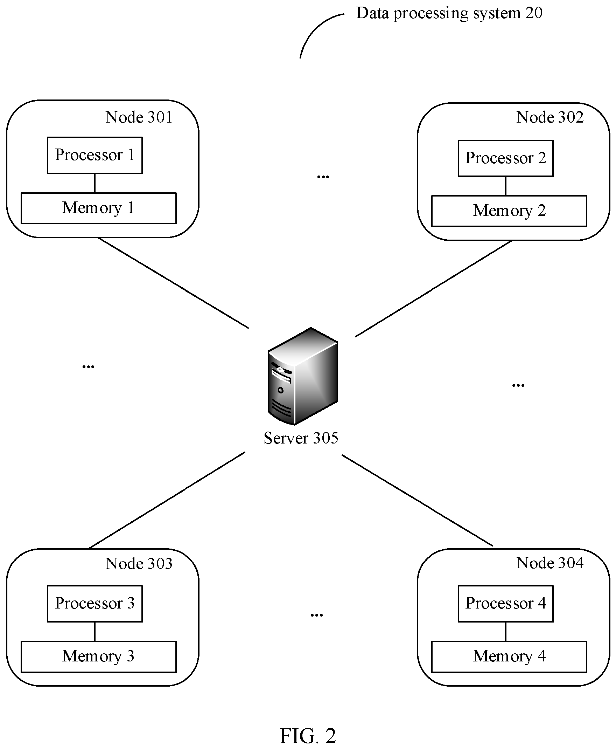

For example, as shown in FIG. 2, a data processing system 20 may include multiple nodes. In FIG. 2, an example in which a node 301 to a node 304 are included is used for description. Each node may be a compute node or a storage node, and each node may include a processor and a memory. In addition, the data processing system 20 further includes a server 305, and the server 305 can be connected to the multiple nodes. When an error occurs in the memory of each node, error data may be sent to the server 305, so that the server 305 may classify Multiple pieces of error data sent by the multiple nodes, and predict, for each type of error data by using a machine learning model that matches the type, whether a UCE occurs in the memory of the node. For a specific implementation, refer to related descriptions of the BMC 203 predicting whether the UCE occurs in the memory 201.

For another example, in the data processing systems in FIG. 1 and FIG. 2, an example in which whether a UCE is generated in a memory is used for description. In another data processing system, whether a UCE occurs in another type of storage medium may also be predicted. For example, a primary controller in a hard disk may predict, based on the foregoing manner, whether a UCE occurs in a storage medium that is in the hard disk and that is used to persistently store data, and the like. The storage medium may be, for example, a solid state disk (solid state disk, SSD).

A specific architecture of the data processing system is not limited in this application.

For ease of understanding, the following describes embodiments of the fault prediction method provided in this application with reference to the accompanying drawings.

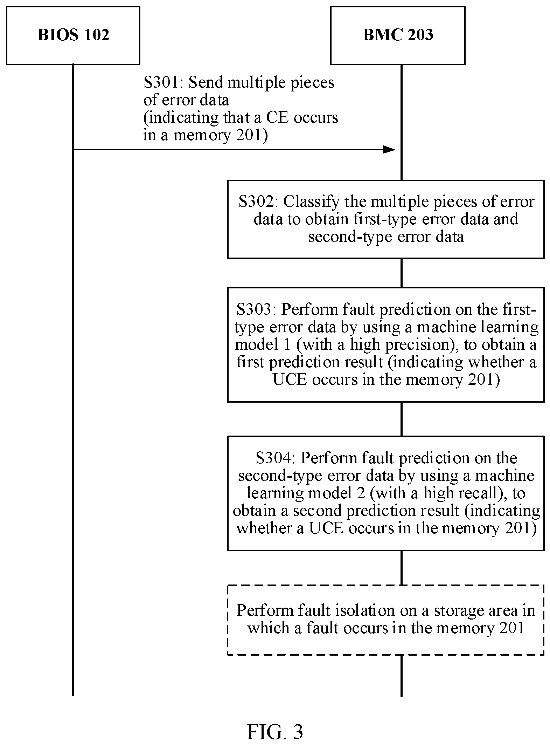

FIG. 3 is a schematic flowchart of a fault prediction method according to this application. The method may be applied to the data processing system 10 shown in FIG. 1, may be applied to the data processing system 20 shown in FIG. 2, or may be applied to another applicable data processing system. For ease of description, in this embodiment, an example in which the method is applied to the data processing system 10 shown in FIG. 1 is used for description. In this case, specifically, the BMC 203 predicts, by using multiple types of machine learning models, whether a UCE occurs in the memory 201.

The fault prediction method shown in FIG. 3 may specifically include the following steps.

S301: The BIOS 102 sends Multiple pieces of error data to the BMC 203, where each of the multiple pieces of error data indicates that a CE occurs in the memory 201.

Generally, after the memory 201 is used for a period of time, a fault may occur in a part of a storage area. The fault that occurs in the storage area may be temporary (for example, a fault occurs in performing data read/write on the storage area at a software level), or may be permanent (for example, a physical damage occurs in the storage area). When the memory controller 2021 performs data read/write on the storage area, if a data read/write error occurs, the memory controller 2021 may perform error reporting for the storage area. Specifically, the memory controller 2021 may send error data to the BIOS 102. The error data may be, for example, CE data, including data such as the storage area for which the error is to be reported, an error type (for example, inspection, and read/write), a data input/output channel (DQ), a burst (burst), a temperature of the storage area, and a voltage of the storage area. This is not limited herein. Then, the BIOS 102 may send the error data to the BMC 203, so that the BMC 203 determines, based on the error data, whether a UCE occurs in the memory 201.

The BMC 203 may continuously receive the multiple pieces of error data sent by the BIOS 102. For example, faults may occur in multiple storage areas in the memory 201 at the same time, so that the BIOS 102 may send the error data for the multiple storage areas to the BMC 203. Alternatively, faults may occur in multiple storage areas in the memory 201 successively, so that the BIOS 102 may send the error data to the BMC 203 successively in a period of time (for example, one hour). In this way, the BMC 203 may determine, based on the received error data, that a CE occurs in the memory 201, and can further determine, based on the error data, whether a UCE occurs in the memory 201.

S302: The BMC 203 classifies the multiple pieces of error data, to obtain first-type error data and second-type error data.

In a possible implementation, a classifier may be configured in the BMC 203, and the BMC 203 may classify the multiple pieces of error data into multiple types by using the classifier. For ease of understanding, this embodiment is described by using an example in which the first-type error data and the second-type error data are obtained through classification on the multiple pieces of error data. In actual practice, the classifier may classify the multiple pieces of error data into more types. This is not limited herein.

During specific implementation, one or more classification rules may be configured in the classifier, so that the classifier may classify the error data according to the one or more classification rules. For example, the classifier may be, for example, a decision tree (decision tree), or may be another type of classifier. The classification rule is a rule used for classifying the error data. The following describes some implementation examples of the classification rule.

Example 1: The classification rule may be specifically a rule of performing classification based on a quantity of failed DQs.

For example, when a quantity of failed DQs that is indicated in error data is less than a threshold 1 (which may be, for example, 2), the BMC 203 may classify the error data as first-type error data according to the classification rule; or when a quantity of failed DQs that is indicated in error data is greater than or equal to a threshold 1, the BMC 203 may classify the data as second-type error data according to the classification rule.

Example 2: The classification rule may be specifically a rule of performing classification based on a quantity of failed bursts.

For example, when a quantity of failed bursts that is indicated in error data is less than a threshold 2, the BMC 203 may classify the error data as first-type error data according to the classification rule; or when a quantity of failed bursts that is indicated in error data is greater than or equal to a threshold 2, the BMC 203 may classify the data as second-type error data according to the classification rule.

Example 3: The classification rule may be specifically a rule of performing classification based on a quantity of failed rows (rows). Each row may include multiple storage cells (cells).

For example, when a quantity of failed rows that is indicated in error data is less than a threshold 3, the BMC 203 may classify the error data as first-type error data according to the classification rule; or when a quantity of failed rows that is indicated in error data is greater than or equal to a threshold 3, the BMC 203 may classify the data as second-type error data according to the classification rule.

The threshold 1 to the threshold 3 may be manually configured by a skilled person. For example, specific values of the threshold 1 to the threshold 3 may be obtained through analysis based on a degree of association between Multiple pieces of error data generated in a past time period and a UCE. Alternatively, the BMC 203 first initializes the threshold 1 to the threshold 3, may dynamically update specific values of the threshold 1 to the threshold 3 in a manner like feedback adjustment, and the like.

Example 4: The classification rule may be specifically a rule of performing classification depending on whether a DQ is missing.

For example, when error data includes information such as an identifier of the DQ, the BMC 203 may classify the error data as first-type error data according to the classification rule; or when error data does not include information like an identifier of the DQ (that is, the information is missing), the BMC 203 may classify the data as second-type error data according to the classification rule.

Example 5: The classification rule may be specifically a rule of performing classification depending on whether a burst is missing.

For example, when error data includes information such as an identifier of the burst, the BMC 203 may classify the error data as first-type error data according to the classification rule; or when error data does not include information like an identifier of the burst (that is, the information is missing), the BMC 203 may classify the data as second-type error data according to the classification rule.

Example 6: The classification rule may be specifically a rule of performing classification depending on whether a value in a parity register is valid (valid).

For example, when error data includes the value in the parity register and the value is valid (DQ and burst information can be parsed out based on the value), the BMC 203 may classify the error data as first-type error data according to the classification rule; or when error data does not include the value in the parity register or the value is invalid (invalid), the BMC 203 may classify the data as second-type error data according to the classification rule.

In addition to the foregoing implementation examples, the classification rule configured in the BMC 203 may alternatively be another type of rule, for example, a user-customized classification rule. This is not limited herein.

In actual practice, the BMC 203 may support a user in configuring the classification rule in the classifier.

For example, the BMC 203 may output multiple candidate classification rules to the processor 202. For example, the BMC 203 may output the six classification rules in the foregoing examples as candidate classification rules to the processor 202, so that the processor 202 may present the multiple candidate classification rules to the user by using a human-machine interaction apparatus (for example, a display) in the data processing system 10. Correspondingly, the user may perform selection, on the human-machine interaction apparatus, among the multiple presented candidate classification rules, or the user may customize a classification rule on the human-machine interaction apparatus. Then, the human-machine interaction apparatus may notify, by using the processor 202, the BMC 203 of a candidate classification rule selected by the user or the classification rule customized by the user. For ease of differentiation and description, the candidate classification rule selected by the user or the user-customized classification rule is referred to as a first classification rule in the following. In this way, the BMC 203 may construct the classifier according to the first classification rule, and subsequently classify the multiple pieces of error data by using the classifier.

In the first-type error data and the second-type error data that are obtained through classification according to the first classification rule, positive-and-negative sample ratios are different. A positive sample is error data generated when a UCE occurs in the memory 201, and a negative sample is error data generated when a CE (no UCE occurs) occurs in the memory 201. Specifically, in the first-type error data, a ratio between a quantity of positive samples and a quantity of negative samples is relatively small. For example, the ratio between positive and negative samples is 1:99.1, representing that a probability that a UCE occurs in the memory 201 and that is indicated by error data classified as the first-type error data is relatively low. In other words, in nearly 100 pieces of error data, only one piece of error data is generated because a UCE occurs in the memory 201. In the second-type error data, a ratio between a quantity of positive samples and a quantity of negative samples is relatively large. For example, the ratio between positive and negative samples is 1:5.3, representing that a probability that a UCE occurs in the memory 201 and that is indicated by error data classified as the second-type error data is relatively high. In other words, in every six pieces of error data, one piece of error data is generated because a UCE occurs in the memory 201. That is, a positive-and-negative sample ratio corresponding to the first-type error data is less than a positive-and-negative sample ratio corresponding to the second-type error data.

For example, assuming that error data includes a quantity of failed DQs, when the quantity of failed DQs is less than 2, a probability that a UCE occurs in the memory 201 is relatively low. In other words, when the quantity of failed DQs is less than 2, a UCE usually does not occur in the memory 201. In this case, the BMC 203 may classify, as type-1 error data, the error data in which the quantity of failed DQs is less than or equal to 1. However, when the quantity of failed DQs is greater than or equal to 2, a probability that a UCE occurs in the memory 201 is relatively high. In other words, when the quantity of failed DQs is greater than or equal to 2, a UCE usually occurs in the memory 201. In this case, the BMC 203 may classify, as type-2 error data, the error data in which the quantity of failed DQs is greater than or equal to 2.

S303: Perform fault prediction on the first-type error data by using a machine learning model 1, to obtain a first prediction result, where the first prediction result indicates whether a UCE occurs in the memory 201, and a precision of predicting, by using the machine learning model 1, whether a UCE occurs in the memory 201 is higher than a first threshold.

S304: Perform fault prediction on the second-type error data by using a machine learning model 2, to obtain a second prediction result, where the second prediction result indicates whether a UCE occurs in the memory 201, and a recall of predicting, by using the machine learning model 2, whether a UCE occurs in the memory 201 is higher than a second threshold.

The prediction precision refers to, among results in which the machine learning model predicts that a UCE will occur, a proportion of cases in which a UCE actually occurs. Precision may be calculated according to the following formula (1): $precision = \frac{TP}{TP + FP}$ (1) precision is the precision; *TP* is a quantity of actual UCEs; *FP* is a quantity of UCEs that do not occur but are determined to occur; and *TP* + *FP* is a total quantity of UCEs that are predicted to occur.

The prediction recall, refers to, among cases in which a UCE actually occurs, a proportion of cases that are correctly predicted by using the machine learning model. Recall may be calculated according to the following formula (2): $recall = \frac{TP}{TP + FN}$ (2) *recall* denotes coverage; *TP* denotes the quantity of cases in which a UCE actually occurs; *FN* denotes a quantity of cases in which a UCE actually occurs but are not predicted by using the machine learning model; and *TP* + *FN* denotes a total quantity of cases in which a UCE actually occurs.

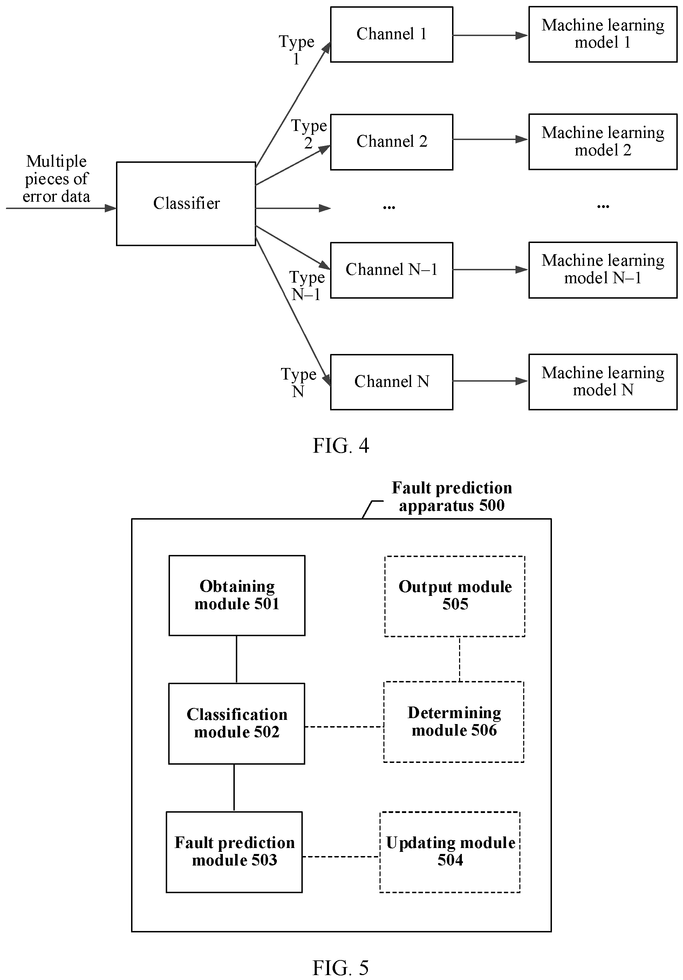

In actual practice, as shown in FIG. 4, after the BMC 203 classifies the multiple pieces of error data by using the classifier, different types of data may be input, through different channels, into machine learning models corresponding to the channels.

In this embodiment, the BMC 203 may input the first-type error data into the machine learning model 1 with a high prediction precision. In this way, for error data that is highly likely to be generated because a CE occurs (no UCE occurs) in the memory 201, the machine learning model 1 with the high prediction precision (the precision is greater than the first threshold) may be used to perform fault prediction, to improve a precision of fault prediction.

In addition, the BMC 203 may input the second-type error data into the machine learning model 2 with a high prediction recall. In this way, for error data that is highly likely to be generated because a UCE occurs in the memory 201, the machine learning model 2 with the high recall (the recall is greater than the second threshold) may be used to perform fault prediction, to improve a prediction recall, in other words, identify as many UCEs as possible.

Each machine learning model may be used to perform fault prediction based on one piece of error data, to determine whether the error data in the memory 201 is generated because a CE occurs or a UCE occurs. Correspondingly, the first prediction result output by the machine learning model 1 includes a prediction result corresponding to each piece of first-type error data (which is similar for the machine learning model 2). Alternatively, each machine learning model may be used to perform fault prediction based on Multiple pieces of error data. In other words, the BMC 203 may input at least two (including two) pieces of error data into a same machine learning model, so that the machine learning model is used to perform fault prediction based on the at least two pieces of error data. Correspondingly, the first prediction result output by the machine learning model 1 includes prediction results corresponding to Multiple pieces of first-type error data (which is similar for the machine learning model 2).

A machine learning model used to perform fault prediction based on different types of error data may use different network structures, or may use different hyperparameters. The following provides examples for description.

Example 1: The machine learning model 1 and the machine learning model 2 may use different model structures, but have a same hyperparameter.

For example, the machine learning model 1 may be a neural network model, and the machine learning model 2 may be a model constructed based on a random forest algorithm; or the machine learning model 1 may be a convolutional neural network (convolutional neural network, CNN) model, and the machine learning model 2 may be a recurrent neural network (recurrent neural network, RNN). However, the machine learning model 1 and the machine learning model 2 may have the same hyperparameter. For example, the two machine learning models may use a same threshold to determine whether a UCE occurs in the memory 201.

Example 2: The machine learning model 1 and the machine learning model 2 may have a same model structure, but use different hyperparameters.

For example, both the machine learning model 1 and the machine learning model 2 are CNN models. However, in the machine learning model 1, a threshold for determining that a UCE occurs in the memory 201 is set to 0.8 (a relatively large threshold is set to improve the precision), and in the machine learning model 2, a threshold for determining that a UCE occurs in the memory 201 is set to 0.4 (a relatively small threshold is set to improve the recall).

Example 3: The machine learning model 1 and the machine learning model 2 may use different model structures and different hyperparameters.

For example, the machine learning model 1 may be a CNN model, and the machine learning model 2 may be an RNN model. In addition, in the machine learning model 1, a threshold for determining that a UCE occurs in the memory 201 is set to 0.8, and in the machine learning model 2, a threshold for determining that a UCE occurs in the memory 201 is set to 0.4.

In this way, for the multiple pieces of error data obtained by the BMC 203, performing fault prediction on the type-1 error data by using the machine learning model 1 and performing fault prediction on the type-2 error data by using the machine learning model 2 can achieve a high precision and a high recall, thereby improving a fault prediction effect for the memory 201. In addition, a false positive rate of fault prediction performed by the BMC 203 on the memory 201 can also be maintained at a low level. The false positive rate is a proportion of a CE is incorrectly predicted as a UCE in a scenario in which the CE actually occurs.

In addition, when information in some dimensions is missing in error data, for example, information about a quantity of DQs or information about a quantity of bursts is missing in the error data, the BMC 203 may predict, by using a machine learning model that matches the error data, whether the memory 201 is faulty. When data in some dimensions is not missing in error data, the BMC 203 may perform fault prediction by using another machine learning model. In this way, a low precision or a low recall that is of fault prediction and that is caused by performing fault prediction on multiple types of error data (error data in which information in some dimensions is missing and error data in which information in some dimensions is not missing) by using a single machine learning model can be avoided.

In actual practice, in the following three test scenarios, both a total precision and a total recall of fault prediction for the multiple pieces of error data reach a high level.

In a test scenario 1, the BMC 203 may perform fault prediction by using 89442 pieces of error data, where the 89442 pieces of error data include 4282 pieces of error data generated because a UCE occurs in the memory 201 (positive samples), and 85160 pieces of error data generated because a CE occurs in the memory 201 (negative samples). After the BMC 203 classifies the 89442 pieces of error data according to the rule of performing classification based on a quantity of failed DQs, there are 66453 pieces of type-1 error data (quantities of failed DQs are less than 2), including 664 positive samples and 65789 negative samples; and there are 22989 pieces of type-2 error data (quantities of failed DQs are greater than or equal to 2), including 3618 positive samples and 19371 negative samples. In this case, fault prediction is performed on the type-1 error data by using a machine learning model 1 whose precision reaches 70% (and whose recall is 10%), and fault prediction is performed on the type-2 error data by using a machine learning model 2 whose recall is 70% (and whose precision is 50%). In this way, a total precision of fault prediction for the 89442 pieces of error data can reach 69.3%, and a total recall can reach 60.7%. In addition, a false positive rate can be reduced to 1.4%.

In a test scenario 2, the BMC 203 may perform fault prediction by using 87301 pieces of error data, where the 87301 pieces of error data include 2141 pieces of error data generated because a UCE occurs in the memory 201 (positive samples), and 85160 pieces of error data generated because a CE occurs in the memory 201 (negative samples). After the BMC 203 classifies the 89442 pieces of error data according to the rule of performing classification based on a quantity of failed bursts, there are 66453 pieces of type-1 error data (quantities of failed bursts are less than 2), including 264 positive samples and 65789 negative samples; and there are 21248 pieces of type-2 error data (quantities of failed bursts are greater than or equal to 2), including 1877 pieces of positive sample data and 19371 pieces of negative sample data. In this case, fault prediction is performed on the type-1 error data by using a machine learning model 1 whose precision reaches 70% (and whose recall is 5%), and fault prediction is performed on the type-2 error data by using a machine learning model 2 whose recall is 70% (and whose precision is 55%). In this way, a total precision of fault prediction for the 89442 pieces of error data can reach 65%, and a total recall can reach 62%. In addition, a false positive rate can be reduced to 1.27%.

In a test scenario 3, the BMC 203 may perform fault prediction by using 87301 pieces of error data, where the 87301 pieces of error data include 2141 pieces of error data generated because a UCE occurs in the memory 201 (positive samples), and 85160 pieces of error data generated because a CE occurs in the memory 201 (negative samples). After the BMC 203 classifies the 89442 pieces of error data according to the rule of performing classification based on a validity status of a value in a parity register, there are 74115 pieces of type-1 error data (values in a parity register are valid), including 1548 positive samples and 72567 negative samples; and there are 13186 pieces of type-2 error data (values in a parity register are invalid), including 593 pieces of positive sample data and 12593 pieces of negative sample data. In this case, fault prediction is performed on the type-1 error data by using a machine learning model 1 whose precision reaches 70% (and whose recall is 35%), and fault prediction is performed on the type-2 error data by using a machine learning model 2 whose recall is 60% (and whose precision is 30%). In this way, a total precision of fault prediction for the 89442 pieces of error data can reach 52%, and a total recall can reach 60%. In addition, a false positive rate can be reduced to 1.42%.

It should be noted that in the embodiment shown in FIG. 2, an example in which the BMC 203 classifies the multiple pieces of error data into two types according to one classification rule (namely, the first classification rule) and separately performs fault prediction by using two machine learning models is used for description. In another embodiment, the BMC 203 may classify the multiple pieces of error data into at least three (including three) types according to multiple classification rules, and separately perform fault prediction by using the at least three machine learning models.

Specifically, an example in which the classifier includes a first classification rule and a second classification rule is used. The first classification rule may be, for example, the rule of performing classification based on a quantity of failed DQs, and the second classification rule may be, for example, the rule of performing classification based on a quantity of failed bursts. In this case, the BMC 203 may classify the multiple pieces of error data into four types according to the two classification rules in the classifier. When a quantity of failed DQs included in error data is less than the threshold 1, and a quantity of failed bursts is less than the threshold 2, the BMC 203 may classify the error data as type-1 error data, and perform fault prediction on the error data by using a machine learning model 1. When a quantity of failed DQs included in error data is greater than or equal to a threshold 1, and a quantity of failed bursts is less than a threshold 2, the BMC 203 may classify the error data as type-2 error data, and perform fault prediction on the error data by using a machine learning model 2. When a quantity of failed DQs included in error data is less than the threshold 1, and a quantity of failed bursts is greater than or equal to the threshold 2, the BMC 203 may classify the error data as type-3 error data, and perform fault prediction on the error data by using a machine learning model 3. When a quantity of failed DQs included in error data is greater than or equal to the threshold 1, and a quantity of failed bursts is greater than or equal to the threshold 2, the BMC 203 may classify the error data as type-4 error data, and perform fault prediction on the error data by using a machine learning model 4.

A precision of the machine learning model 1 may be higher than those of the remaining machine learning models, and recalls of the remaining machine learning models may be higher than that of the machine learning model 1. In the machine learning model 2 to the machine learning model 4, conditions for determining, based on error data, whether a UCE occurs in the memory 201 may be different. For example, in the machine learning model 2 to the machine learning model 4, thresholds for determining that a UCE occurs in the memory 201 are different.

In an actual test scenario, for the first classification rule and the second classification rule, both a total precision and a total recall of fault prediction for the multiple pieces of error data reach a high level.

Specifically, the BMC 203 may perform fault prediction by using 89442 pieces of error data, where the 89442 pieces of error data include 4282 pieces of error data generated because a UCE occurs in the memory 201, and 85160 pieces of error data generated because a CE occurs in the memory 201. After the BMC 203 classifies the 89442 pieces of error data according to the first classification rule and the second classification rule, four types may be obtained. There are 12756 pieces of type-1 error data (quantities of failed DQs are less than 2 and quantities of failed bursts are less than 2), including 163 positive samples and 12593 negative samples. There are 25839 pieces of type-2 error data (quantities of failed DQs are less than 2 and quantities of failed bursts are greater than or equal to 2), including 1852 positive samples and 23987 negative samples. There are 5295 pieces of type-3 error data (quantities of failed DQs are greater than or equal to 2 and quantities of failed bursts are less than 2), including 597 positive samples and 4698 negative samples. There are 45552 pieces of type-4 error data (quantities of failed DQs are greater than or equal to 2 and quantities of failed bursts are greater than or equal to 2), including 1670 positive samples and 43882 negative samples. In this case, the BMC 203 may perform fault prediction on the type-1 error data by using the machine learning model 1 whose precision is 60% (and whose recall is 10%), perform fault prediction on the type-2 error data by using the machine learning model 2 whose recall is 65% (and whose precision is 50%), perform fault prediction on the type-3 error data by using the machine learning model 3 whose recall is 70% (and whose precision is 50%), and perform fault prediction on the type-4 error data by using the machine learning model 4 whose recall is 60% (and whose precision is 55%). In this way, a total precision of fault prediction for the 89442 pieces of error data can reach 61.4%, and a total recall can reach 61.7%. In addition, a false positive rate can be reduced to 1.95%. In the machine learning model 1 to the machine learning model 4, thresholds (in other words, determining conditions) for determining that a UCE occurs in the memory 201 may be 0.9, 0.4, 0.5, and 0.7 in sequence.

Further, after it is predicted that a UCE occurs in the memory 201, the following several non-limiting implementations may be used for processing.

Example 1: After predicting that the UCE occurs in the memory 201, the BMC 203 may perform a corresponding fault isolation operation on a storage area in which a fault occurs in the memory 201, as shown in FIG. 3. For example, when a fault occurs in a storage area in the memory 201, the BMC 203 may remap, to access to a storage area in a storage resource reserved in the memory 201 or the memory controller 2021, access of a service in the OS 101 to the storage area in which a fault occurs, for example, may remap a virtual address corresponding to a physical address of a first storage area to a physical address corresponding to a corresponding storage area in the reserved storage resource. Alternatively, the BMC 203 may perform, through page table management, offline processing on a page (page) corresponding to the storage area in which the fault occurs in the memory 201, so that multiple pages subsequently accessed by a service in the OS 101 do not include the page on which offline processing has been performed, that is, performs memory page offline (page offline).

Example 2: After predicting that the UCE occurs in the memory 201, the BMC 203 may generate an alarm for the UCE. For example, the BMC 203 may generate alarm information for the UCE, and send the alarm information to the OS 101, so that the OS 101 may perform a corresponding operation based on the alarm information. For example, the OS 101 may present the alarm information to the user by using the human-machine interaction apparatus, so that the user can perceive in time that a fault occurs in the memory 201 and maintain the memory 201. Alternatively, the BMC 203 may perform fault preprocessing on the memory 201 in advance based on the alarm information, for example, migrate, to another normal storage area, data in a storage area in which the UCE is generated in the memory 201, or recover data in the storage area by using a data recovery mechanism. This is not limited in this embodiment.

Example 3: When outputting a prediction result that a UCE occurs, a machine learning model may further output a confidence level, where the confidence level is used to measure a degree of trustworthiness of the machine learning model in predicting that the UCE occurs in the memory 201. In this way, when the confidence level is relatively high, for example, a value of the confidence level is greater than 85%, the BMC 203 may directly perform a fault isolation operation, for example, the fault isolation operation described in the foregoing example 1, on a storage area in which the UCE is generated in the memory 201. When the confidence level is relatively low, for example, a value of the confidence level is less than 85%, the BMC 203 may generate an alarm for the UCE, and send alarm information to the OS 101; the BMC 203 performs fault preprocessing on the memory 201 in advance based on the alarm information; or the like.

In actual practice, after predicting that the UCE occurs in the memory 201, the BMC 203 may alternatively use other manners. This is not limited herein.

In addition, when predicting, by using a machine learning model, that a CE occurs in the memory 201 (that is, no UCE occurs), the BMC 203 may not need to perform an additional operation.

In a further possible implementation, multiple machine learning models or the classifier in the BMC 203 may be further dynamically updated.

In an implementation example of updating the machine learning model, after performing fault prediction on the multiple pieces of error data by using the machine learning model 1 and the machine learning model 2, and obtaining the fault prediction results, the BMC 203 may obtain actual results corresponding to the error data. For example, after the BMC 203 completes fault prediction based on one piece of error data, if a UCE reported by the BIOS 102 is received, it may be determined that a ground-truth result corresponding to the error data is that the UCE occurs in the memory 201; or if no UCE reported by the BIOS 102 is received, it may be determined that a ground-truth result corresponding to the error data is that a CE occurs in the memory 201 (that is, no UCE occurs). Then, the BMC 203 may update the machine learning model 1, including updating one or more of a hyperparameter, a parameter, or a model structure of the machine learning model 1, based on a ground-truth result corresponding to the first-type error data and the first prediction result output by the machine learning model 1. Similarly, the BMC 203 may update the machine learning model 2 based on a ground-truth result corresponding to the second-type error data and the second prediction result output by the machine learning model 2.

In an implementation example of updating the classifier, after performing fault prediction on the multiple pieces of error data by using the machine learning model 1 and the machine learning model 2, and obtaining the corresponding prediction results, the BMC 203 may obtain actual results corresponding to the error data. The ground-truth result indicates that a UCE occurs in the memory 201 or no UCE occurs in the memory 201. Then, the BMC 203 may update the classifier, including adjusting one or more of the classification rule in the classifier, a threshold in the classification rule, and a classification algorithm used by the classifier, based on the ground-truth result corresponding to the first-type error data, the ground-truth result corresponding to the second-type error data, the first prediction result output by the machine learning model 1, and the second prediction result output by the machine learning model 2.

It should be noted that in the embodiment shown in FIG. 3, an example in which the BMC 203 predicts, by using different machine learning models, whether a UCE occurs in the memory 201 is used for description. In the data processing system 20 shown in FIG. 2, the server 305 may predict, by using multiple different machine learning models, whether a UCE occurs in the memory of each node; in a persistent storage scenario, the primary controller may predict, by using multiple different machine learning models, whether a UCE occurs in a persistent storage medium; or the like. For a specific implementation process thereof, refer to related descriptions in the embodiment shown in FIG. 3. Details are not described herein again.

It should be noted that another appropriate step combination that can be figured out by a person skilled in the art based on the content described above also falls within the protection scope of this application. In addition, a person skilled in the art should further understand that embodiments described in this specification all belong to example embodiments, and the involved actions are not necessarily required by this application.

The foregoing describes the fault prediction method provided in embodiments of this application with reference to FIG. 1 to FIG. 4. The following describes structures of a fault prediction apparatus and a compute device provided in embodiments of this application with reference to the accompanying drawings.

FIG. 5 is a diagram of a structure of a processor. The fault prediction apparatus 500 includes:
an obtaining module 501, configured to obtain Multiple pieces of error data, where each of the multiple pieces of error data indicates that a correctable error CE occurs in a storage medium;
a classification module 502, configured to classify the multiple pieces of error data, to obtain first-type error data and second-type error data; and
a fault prediction module 503, configured to: perform fault prediction on the first-type error data by using a first machine learning model, to obtain a first prediction result, where the first prediction result indicates whether an uncorrectable error UCE occurs in the storage medium, and a precision of the first machine learning model in predicting a UCE is higher than a first threshold; and perform fault prediction on the second-type error data by using a second machine learning model, to obtain a second prediction result, where the second prediction result indicates whether a UCE occurs in the storage medium, and a recall of predicting of the second machine learning model in predicting a UCE is higher than a second threshold.

In a possible implementation, a positive-and-negative sample ratio corresponding to the first-type error data is less than a positive-and-negative sample ratio corresponding to the second-type error data, the positive-and-negative sample ratio is a ratio between a quantity of positive samples and a quantity of negative samples, the positive samples are error data generated when a UCE occurs in the storage medium, and the negative samples are error data generated when a CE occurs in the storage medium.

In a possible implementation, the first machine learning model and the second machine learning model have different model structures or different hyperparameters.

In a possible implementation, the fault prediction apparatus 500 further includes an updating module 504, and the updating module 504 is configured to:
obtain a ground-truth result corresponding to the first-type error data, where the ground-truth result indicates that a UCE or a CE occurs in the storage medium; and update the first machine learning model based on the first prediction result and the ground-truth result corresponding to the first-type error data; or
obtain a ground-truth result corresponding to the second-type error data, where the ground-truth result indicates that a UCE or a CE occurs in the storage medium; and update the second machine learning model based on the second prediction result and the ground-truth result corresponding to the second-type error data.

In a possible implementation, the multiple pieces of error data are classified by using a classifier, and the fault prediction apparatus 500 further includes the updating module 504, and the updating module 504 is configured to:
obtain the ground-truth result corresponding to the first-type error data and the ground-truth result corresponding to the second-type error data, where the ground-truth result indicates that a UCE or a CE occurs in the storage medium; and
update the classifier based on the ground-truth result corresponding to the first-type error data, the ground-truth result corresponding to the second-type error data, the first prediction result, and the second prediction result.

In a possible implementation, the multiple pieces of error data are classified by using the classifier, and the classifier includes a first classification rule and a second classification rule.

The classification module 502 is configured to classify the multiple pieces of error data according to the first classification rule in the classifier, to obtain the first-type error data, the second-type error data, third-type error data, and fourth-type error data.

The fault prediction module 503 is further configured to:
perform fault prediction on the third-type error data by using a third machine learning model, to obtain a third prediction result, where the third prediction result indicates whether an uncorrectable error UCE occurs in the storage medium; and
perform fault prediction on the fourth-type error data by using a fourth machine learning model, to obtain a fourth prediction result, where the fourth prediction result indicates whether a UCE occurs in the storage medium.

In a possible implementation, the fault prediction apparatus 500 further includes:
an output module 505, configured to output multiple candidate classification rules; and
a determining module 506, configured to determine, in response to a selection operation of a user for the multiple candidate classification rules, the first classification rule used by the classifier to classify the multiple pieces of error data.

Because the task processing apparatus 500 shown in FIG. 5 corresponds to the BMC 203 in the embodiment shown in FIG. 3, for a specific implementation of the task processing apparatus 500 shown in FIG. 5 and a technical effect thereof, refer to related descriptions in the embodiment shown in FIG. 3. Details are not described herein again.

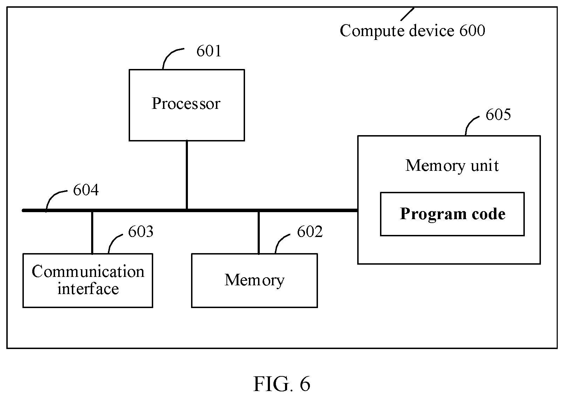

FIG. 6 is a diagram of a hardware structure of a compute device 600 according to this application. The compute device 600 may implement, for example, the BMC 203 in the embodiment shown in FIG. 3.

As shown in FIG. 6, the compute device 600 includes a processor 601, a memory 602, and a communication interface 603. The processor 601, the memory 602, and the communication interface 603 may implement communication through a bus 604, or may implement communication in another manner like wireless transmission. The memory 602 is configured to store instructions, and the processor 601 is configured to execute the instructions stored in the memory 602. Further, the compute device 600 may further include a memory unit 605, and the memory unit 605 may be connected to the processor 601, the storage medium 602, and the communication interface 603 through the bus 604. The memory 602 stores program code, and the processor 601 may invoke the program code stored in the memory 602, to perform the following operations:
obtaining Multiple pieces of error data, where each of the multiple pieces of error data indicates that a correctable error CE occurs in a storage medium;
classifying the multiple pieces of error data, to obtain first-type error data and second-type error data;
performing fault prediction on the first-type error data by using a first machine learning model, to obtain a first prediction result, where the first prediction result indicates whether an uncorrectable error UCE occurs in the storage medium, and a precision of the first machine learning model in predicting a UCE is higher than a first threshold; and
performing fault prediction on the second-type error data by using a second machine learning model, to obtain a second prediction result, where the second prediction result indicates whether a UCE occurs in the storage medium, and a recall of predicting of the second machine learning model in predicting a UCE is higher than a second threshold.

It should be understood that in this embodiment of this application, the processor 601 may be a CPU, or the processor 601 may be another general-purpose processor, a digital signal processor (DSP), an application-specific integrated circuit (ASIC), a field programmable gate array (FPGA), another programmable logic device, a discrete gate, a transistor logic device, a discrete device, or the like. The general-purpose processor may be a microprocessor, any conventional processor, or the like.

The memory 602 may include a read-only memory and a random access memory, and provide instructions and data for the processor 601. The memory 602 may further include a non-volatile random access memory.

The memory 602 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 603 is configured to communicate with another device connected to the compute device 600. The bus 604 may further include a power bus, a control bus, a status signal bus, and the like, in addition to a data bus. However, for clear description, various types of buses are all marked as the bus 604 in the figure.

It should be understood that the compute device 600 according to this embodiment of this application may correspond to the task processing apparatus 500 in embodiments of this application, and may correspondingly perform the method performed by the BMC 203 in the method shown in FIG. 3 in embodiments of this application. The foregoing and other operations and/or functions implemented by the compute device 600 are separately used to implement a procedure of the corresponding method in FIG. 3. For brevity, details are not described herein again.

This application provides a BMC. The BMC includes a power supply circuit and a processing circuit. The power supply circuit is configured to supply power to the processing circuit, and the processing circuit is configured to perform the method performed by the BMC 203 in the method shown in FIG. 3.

An embodiment of this application further provides a computer-readable storage medium. The computer-readable storage medium may be any usable medium accessible by a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct a compute device to perform the foregoing fault prediction method.

An embodiment of this application further provides a computer program product. The computer program product includes one or more computer instructions. When the computer instructions are loaded and executed on a compute device, the procedures or functions according to embodiments of this application are all or partially generated.

The computer instructions may be stored in a computer-readable storage medium, or may be transmitted from a computer-readable storage medium to another computer-readable storage medium. For example, the computer instructions may be transmitted from a website, a computer, or a data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method of the foregoing fault prediction method needs to be used, the computer program product may be downloaded and executed on the compute device.

All or some of the foregoing embodiments may be implemented by software, hardware, firmware, or any combination thereof. When the software is used for implementation, the foregoing embodiments may be completely or partially implemented in a form of a computer program product. The computer program product includes one or more computer instructions. When the computer program instructions are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, including one or more usable media. The usable medium may be a magnetic medium (for example, a floppy disk, a hard disk, or a magnetic tape), an optical medium (for example, a DVD), or a semiconductor medium. The semiconductor medium may be a solid state disk.

Terms used in the foregoing embodiments are merely intended to describe specific embodiments, but are not intended to limit this application. As used in the specification and appended claims of this application, the terms "one", "a", "the", "the foregoing", "this", and "this one" in singular forms are intended to also include expressions such as "one or more", unless otherwise indicated in the context explicitly. It should be further understood that, in embodiments of this application, "one or more" means one, two, or more, and the character "/" generally indicates an "or" relationship between associated objects. In embodiments of this application, "simultaneously" means being in a same time period, and includes a case of being at a same moment. In the specification, claims, and accompanying drawings of this application, the terms "first", "second", and the like are intended to distinguish between similar objects but do not necessarily indicate a specific order or sequence. It should be understood that the terms used in such a manner are interchangeable in proper circumstances, and this is merely a distinguishing manner used when objects with a same attribute are described in embodiments of this application.

Reference to "one embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A fault prediction method, wherein the method comprises:
obtaining Multiple pieces of error data, wherein each of the multiple pieces of error data indicates that a correctable error CE occurs in a storage medium;
classifying the multiple pieces of error data, to obtain first-type error data and second-type error data;
performing fault prediction on the first-type error data by using a first machine learning model, to obtain a first prediction result, wherein the first prediction result indicates whether an uncorrectable error UCE occurs in the storage medium, and a precision of the first machine learning model in predicting a UCE is higher than a first threshold; and
performing fault prediction on the second-type error data by using a second machine learning model, to obtain a second prediction result, wherein the second prediction result indicates whether the UCE occurs in the storage medium, and a recall of the second machine learning model in predicting the UCE is higher than a second threshold.

2. The method according to claim 1, wherein a positive-and-negative sample ratio corresponding to the first-type error data is less than a positive-and-negative sample ratio corresponding to the second-type error data, the positive-and-negative sample ratio is a ratio between a quantity of positive samples and a quantity of negative samples, the positive samples are error data generated when a UCE occurs in the storage medium, and the negative samples are error data generated when a CE occurs in the storage medium.

3. The method according to claim 1 or 2, wherein the first machine learning model and the second machine learning model have different model structures or different hyperparameters.

4. The method according to claim 3, wherein the method further comprises:
obtaining a ground-truth result corresponding to the first-type error data, wherein the ground-truth result indicates that a UCE or a CE occurs in the storage medium; and updating the first machine learning model based on the first prediction result and the ground-truth result corresponding to the first-type error data; or
obtaining a ground-truth result corresponding to the second-type error data, wherein the ground-truth result indicates that a UCE or a CE occurs in the storage medium; and updating the second machine learning model based on the second prediction result and the ground-truth result corresponding to the second-type error data.

5. The method according to any one of claims 1 to 4, wherein the multiple pieces of error data are classified by using a classifier, and the method further comprises:
obtaining the ground-truth result corresponding to the first-type error data and the ground-truth result corresponding to the second-type error data, wherein the ground-truth result indicates that a UCE or a CE occurs in the storage medium; and
updating the classifier based on the ground-truth result corresponding to the first-type error data, the ground-truth result corresponding to the second-type error data, the first prediction result, and the second prediction result.

6. The method according to any one of claims 1 to 5, wherein the multiple pieces of error data are classified by using the classifier, and the classifier comprises a first classification rule; and
the classifying the multiple pieces of error data comprises:
classifying the multiple pieces of error data according to the first classification rule in the classifier.

7. The method according to any one of claims 1 to 5, wherein the multiple pieces of error data are classified by using the classifier, and the classifier comprises a first classification rule and a second classification rule;
the classifying the multiple pieces of error data comprises:
classifying the multiple pieces of error data according to the first classification rule in the classifier, to obtain the first-type error data, the second-type error data, the third-type error data, and the fourth-type error data; and
the method further comprises:
performing fault prediction on the third-type error data by using a third machine learning model, to obtain a third prediction result, wherein the third prediction result indicates whether an uncorrectable error UCE occurs in the storage medium; and
performing fault prediction on the fourth-type error data by using a fourth machine learning model, to obtain a fourth prediction result, wherein the fourth prediction result indicates whether the UCE occurs in the storage medium.

8. The method according to claim 6 or 7, wherein the method further comprises:
outputting multiple candidate classification rules; and
determining, in response to a selection operation of a user for the multiple candidate classification rules, the first classification rule used by the classifier to classify the multiple pieces of error data.

9. A fault prediction apparatus, wherein the apparatus comprises:
an obtaining module, configured to obtain Multiple pieces of error data, wherein each of the multiple pieces of error data indicates that a correctable error CE occurs in a storage medium;
a classification module, configured to classify the multiple pieces of error data, to obtain first-type error data and second-type error data; and
a fault prediction module, configured to: perform fault prediction on the first-type error data by using a first machine learning model, to obtain a first prediction result, wherein the first prediction result indicates whether an uncorrectable error UCE occurs in the storage medium, and a precision of the first machine learning model in predicting the UCE is higher than a first threshold; and perform fault prediction on the second-type error data by using a second machine learning model, to obtain a second prediction result, wherein the second prediction result indicates whether the UCE occurs in the storage medium, and a recall of the second machine learning model in predicting the UCE is higher than a second threshold.

10. The apparatus according to claim 9, wherein a positive-and-negative sample ratio corresponding to the first-type error data is less than a positive-and-negative sample ratio corresponding to the second-type error data, the positive-and-negative sample ratio is a ratio between a quantity of positive samples and a quantity of negative samples, the positive samples are error data generated when a UCE occurs in the storage medium, and the negative samples are error data generated when a CE occurs in the storage medium.

11. The apparatus according to claim 9 or 10, wherein the first machine learning model and the second machine learning model have different model structures or different hyperparameters.

12. The apparatus according to claim 11, wherein the apparatus further comprises an updating module, and the updating module is configured to:
obtain a ground-truth result corresponding to the first-type error data, wherein the ground-truth result indicates that a UCE or a CE occurs in the storage medium; and update the first machine learning model based on the first prediction result and the ground-truth result corresponding to the first-type error data; or
obtain a ground-truth result corresponding to the second-type error data, wherein the ground-truth result indicates that a UCE or a CE occurs in the storage medium; and update the second machine learning model based on the second prediction result and the ground-truth result corresponding to the second-type error data.

13. The apparatus according to any one of claims 9 to 12, wherein the multiple pieces of error data are classified by using a classifier, the apparatus further comprises the updating module, and the updating module is configured to:
obtain the ground-truth result corresponding to the first-type error data and the ground-truth result corresponding to the second-type error data, wherein the ground-truth result indicates that a UCE or a CE occurs in the storage medium; and
update the classifier based on the ground-truth result corresponding to the first-type error data, the ground-truth result corresponding to the second-type error data, the first prediction result, and the second prediction result.

14. A compute device, comprising a processor and a memory, wherein
the processor is configured to execute instructions stored in the memory, to cause the compute device to perform steps of the method according to any one of claims 1 to 8.

15. A computer-readable storage medium, comprising instructions, wherein when the instructions are executed by a compute device, the compute device is caused to perform steps of the method according to any one of claims 1 to 8.
